# EUROPÄISCHE PATENTSCHRIFT

(11) **EP 1 713 365 B1**
(45) Veröffentlichungstag und Bekanntmachung des Hinweises auf die Patenterteilung: **24.12.2008**
(21) Anmeldenummer: 05716588.8
(22) Anmeldetag: 19.01.2005
(51) Int. Cl.: A47J 31/54

(54) **KAFFEEMASCHINE MIT DURCHLAUFERHITZER**
COFFEE MACHINE COMPRISING A CONTINUOUS HEATER
MACHINE A CAFE COMPORTANT UN CHAUFFE-EAU INSTANTANE

(30) Priorität: 30.01.2004 DE 102004004821
(43) Veröffentlichungstag der Anmeldung: 25.10.2006
(73) Patentinhaber: BSH Bosch und Siemens Hausgeräte GmbH, 81739 München (DE)
(72) Erfinder: MAGG, Johann, 83368 St. Georgen (DE); OBERMAIER, Markus, 83365 Nussdorf (DE)
(86) Internationale Anmeldenummer: PCT/EP2005/050220
(87) Internationale Veröffentlichungsnummer: WO 2005/072584

(56) Entgegenhaltungen:
- WO-A-03/030696
- DE-A1- 2 551 779
- GB-A- 2 318 173
- US-A- 3 711 681
- US-A- 4 066 201
- US-A- 5 367 607

## Beschreibung

Die Erfindung betrifft eine Kaffeemaschine gemäß dem Oberbegriff von Anspruch 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch beheizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet werden kann.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer Kaffeemehlaufnahmeeinrichtung zugeführt wird. Dabei ist vorgesehen, dass der Kaffee, anders als bei der Espressomaschine, nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll der Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

Insbesondere im Zusammenhang mit Kaffeemaschinen, die auf der Grundlage von Kaffeepads Kaffee zubereiten, kann das von der Pumpe beförderte Wasser in einem Durchlauferhitzer erwärmt werden. Die WO 03/030696 A1 beschreibt eine solche Kaffeemaschine. Der Durchlauferhitzer umfasst dabei ein Rohrstück, das von in Aluminiumguss eingebetteten Heizelementen teilweise umschlossen ist. Diese gesamte Anordnung mit weiteren Komponenten ist von einem Gehäuse umgeben, mit dem der Durchlauferhitzer in das Kaffeemaschinengehäuse eingesetzt wird. Eine solche Lösung ist aufwendig und daher mit hohen Kosten verbunden.

Dokument EP-A-1321708 offenbart eine Kaffeemaschine nach dem Oberbegriff des unabhängigen Anspruchs 1.

Aufgabe der Erfindung ist es, eine Kaffeemaschine mit einem Durchlauferhitzer zur Verfügung zu stellen, die einfach und kostengünstig gefertigt werden kann und einen guten Wärmeübergang zwischen den Heizstäben und dem Rohr zur Wasserführung gleichzeitig aber auch eine gute Wärmeisolierung zwischen dem Durchlauferhitzer und dem Gehäuse beziehungsweise den Schläuchen ermöglicht.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung wird nun mit Bezug auf die begleitenden Zeichnungen anhand besonders bevor□zugter Ausführungsformen beispielhaft erläutert. Dabei zeigt:
Figur 1 eine Schnittdarstellung einer Kaffeemaschine zur Erläuterung der Erfindung; und
Figur 2 eine perspektivische Darstellung eines Gehäuseteils sowie im Gehäuse angeordneter Bauteile zur Erläuterung der Erfindung.

Bei der nachfolgenden Beschreibung der Zeichnungen bezeichnen gleiche Bezugszeichen gleiche oder vergleichbare Komponenten.

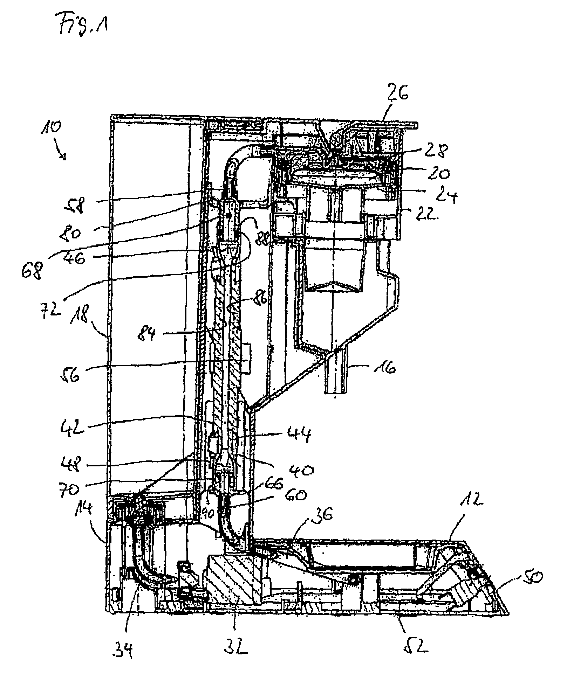

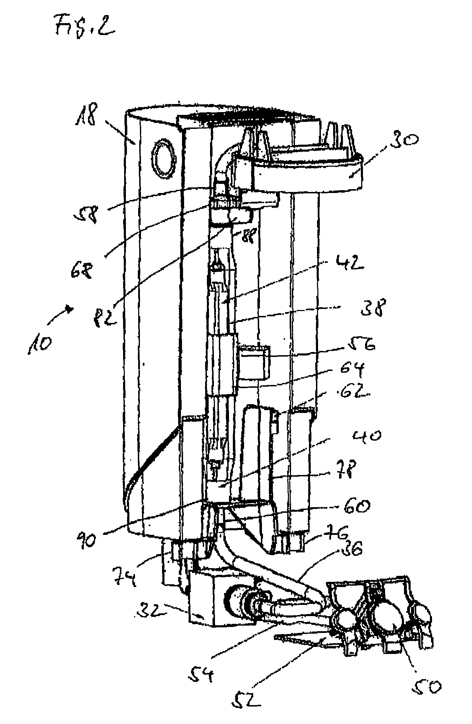

Figur 1 zeigt eine Schnittdarstellung einer Kaffeemaschine zur Erläuterung der Erfindung. Figur 2 zeigt eine perspektivische Darstellung eines Gehäuseteils sowie im Gehäuse angeordneter Bauteile zur Erläuterung der vorliegenden Erfindung. Die Kaffeemaschine 10 umfasst ein flaches Vorderteil 12 und eine säulenartige hintere Baugruppe 14. Auf dem Vorderteil 12 können Tassen zur Entnahme von Kaffee über einen Auslauf 16 angeordnet werden. In die hintere Baugruppe 14 ist ein Wasserbehälter 18 eingesetzt. Die hintere Baugruppe 14 umfasst weiterhin eine Brühkammer 20, die durch einen mit einer Schublade zuführbaren Kaffeepadhalter 24 und eine elastische Halterabdeckung 28 als Brühkammeroberteil 30 gebildet wird. Um den Kaffeepadhalter 24 und die Halterabdeckung 28 nach dem Einschieben der Schublade 22 gegeneinander abzudichten, ist ein Hebelmechanismus mit einem Hebel 26 vorgesehen. Im dargestellten Zustand zieht der Hebelmechanismus den Kaffeepadhalter 24 gegen die Halterabdeckung 28. Legt man den Hebel 26 um 90° nach hinten um, so wird der Kaffeepadhalter 24 abgesenkt, so dass er zusammen mit der Schublade 22 aus der Kaffeemaschine 10 entnehmbar ist.

Innerhalb des durch das Vorderteil 12 und die hintere Baugruppe 14 gebildeten Gehäuses sind Komponenten zur Förderung von Wasser, zur Erwärmung von Wasser und zur Steuerung dieser Vorgänge vorgesehen. Im unteren Gehäusebereich an der Grenze zwischen dem Vorderteil 12 und der hinteren Baugruppe 14 ist eine Pumpe 32 angeordnet, der über einen Schlauch 34 Wasser aus dem Wasserbehälter 18 zugeführt wird. Über einen weiteren Schlauch 36 ist die Pumpe 32 mit einem Durchlauferhitzer 38 verbunden. Wesentliche Komponenten dieses Durchlauferhitzers 38 sind ein der Wasserführung dienendes Rohr 40 sowie zwei Heizstäbe 42, 44. Diese Heizstäbe 42, 44 weisen jeweils zwei elektrische Anschlüsse 46, 48 auf, an die die Heizspannung angelegt wird. Am Vorderteil 12 der Kaffeemaschine 10 ist ein Tastenfeld 50 vorgesehen, das mit einer Elektronikplatine 52 verbunden ist, wobei die Elektronikplatine 52 vorzugsweise sämtliche Funktionen der Kaffeemaschine steuert, insbesondere die Funktionen im Hinblick auf die Förderung und die Erwärmung des Wassers. Ausgehend von der Elektronikplatine 52 ist eine Kabelführung 54 vorgesehen, in der die elektrischen Leitungen zusammengefasst sind, über die die elektronische Steuerung ihre Steuerbefehle ausgibt und Eingangsinformationen empfängt. Diese Eingangsinformationen betreffen insbesondere die von einem Temperaturfühler 56 erfasste Temperatur des Durchlauferhitzers sowie vorzugsweise weitere Temperaturinformationen, die von Temperaturfühlern an Messstellen 58, 60 in Strömungsrichtung hinter beziehungsweise vor dem Durchlauferhitzer 38 erfasst werden. In der hinteren Baugruppe 14 ist weiterhin ein Reedschalter 62 angeordnet. Aufgabe des Reedschalters 62 ist es, einen Mindestfüllstand im Wasserbehälter 18 elektrisch zu detektieren. Dazu ist im Wasserbehälter 18 ein Schwimmer vertikal verschieblich gelagert, der einen Magneten aufweist. Bei Unterschreiten einer Mindestfüllmenge im Wasserbehälter 18 befindet sich der Magnetschwimmer nahe des Reedschalters 62 und lässt diesen einschalten, wodurch ein Stromkreis geschlossen wird, der ein Signal über das Unterschreiten des Füllstandes an die elektronische Steuerung übergibt. Ist der Füllstand im Wasserbehälter geringer als die Mindestfüllmenge, kann die Kaffeemaschine nicht in Betrieb genommen werden. Der Durchlauferhitzer 38 kann weiterhin über einen Fühler verfügen, der ein Trockenlaufen während des Heizvorgangs verhindert.

Kontaktflächen 84, 86 der Heizstäbe 42, 44 sind eben ausgebildet und stehen mit entsprechenden Kontaktflächen beziehungsweise Abflachungen des Rohrs 40 in Verbindung. So kann eine gute Anlage und folglich ein guter Wärmeübergang zwischen den Heizstäben 42, 44 und dem Rohr 40 erfolgen. Die Kontaktflächen 84, 86 erstrecken sich vorzugsweise über die gesamte oder nahezu die gesamte Länge des Durchlauferhitzers 38, wobei eine beispielhafte radiale Position der Kontaktflächen 84, 86 in Figur 1 durch unterbrochene Linien gekennzeichnet ist. Die Anordnung von Rohr 40 und Heizstäben 42, 44 wird durch eine Manschette 64 zusammengehalten, die aus wärmebeständigem Kunststoff oder Metall gefertigt sein kann. Im Bereich dieser Manschette 64 ist der Temperaturfühler 56 angeordnet. An den Enden des Rohrs 40 sind Schlauchanschlussstutzen 66, 68 angebracht. Diese sind im vorliegenden Ausführungsbeispiel in das Rohr 40 eingesteckt und mit einer umlaufenden Dichtung 70, 72, beispielsweise einem O-Ring, ausgestattet. An den aus hitzebeständigem Kunststoff gefertigten Schlauchanschlussstutzen 66, 68 sind Befestigungsmittel 74, 76, 78, 80 angeformt, wobei nur einige der Befestigungsmittel hier beispielhaft mit Bezugszeichen gekennzeichnet sind Diese Befestigungsmittel 74, 76, 78, 80 dienen zur Befestigung und Zentrierung des Durchlauferhitzers 38 im Gehäuse und weiterhin zur Aufnahme zusätzlicher Komponenten, beispielsweise zur Aufnahme des Reedschalters 62 in dem Befestigungsmittel 78. In den Schlauchanschlussstutzen 68 ist weiterhin ein Sicherheitsventil 82 integriert. Der Durchlauferhitzer 38 kann somit zusammen mit den Schlauchanschlussstutzen 66, 68 und den aufgesteckten Schläuchen komplett montiert werden und ohne weiteres aufgrund der zentrierenden Eigenschaften in das Gehäuse eingesetzt werden.

### Bezugszeichenliste

- 10: Kaffeemaschine
- 12: Vorderteil
- 14: hintere Baugruppe
- 16: Auslauf
- 18: Wasserbehälter
- 20: Brühkammer
- 22: Schublade
- 24: Kaffeepadhalter
- 26: Hebel
- 28: Halterabdeckung
- 30: Brühkammeroberteil
- 32: Pumpe
- 34: Schlauch
- 36: Schlauch
- 38: Durchlauferhitzer
- 40: Rohr
- 42: Heizstab
- 44: Heizstab
- 46: elektrischer Anschluss
- 48: elektrischer Anschluss
- 50: Tastenfeld
- 52: Elektronikplatine
- 54: Kabelführung
- 56: Temperaturfühler
- 58: Messstelle
- 60: Messstelle
- 62: Reedschalter
- 64: Manschette
- 66: Schlauchanschlussstutzen
- 68: Schlauchanschlussstutzen
- 70: Dichtung
- 72: Dichtung
- 74: Befestigungsmittel
- 76: Befestigungsmittel
- 78: Befestigungsmittel
- 80: Befestigungsmittel
- 82: Sicherheitsventil
- 84: Kontaktfläche
- 86: Kontaktfläche
- 88: Ende
- 90: Ende

## Patentansprüche

1. Kaffeemaschine zur Kaffeezubereitung, insbesondere auf der Grundlage von Kaffeepads, mit einer Pumpe (32) zum Fördern von Wasser, einen massearmen Durchlauferhitzer (38), der ein abgeflachtes Rohr (40) zur Wasserführung aufweist, das thermisch mit zwei an gegenüberliegenden Seiten des abgeflachten Rohres vorgesehenen Heizstäben (42, 44) über jeweils mindestens eine Kontaktfläche (84, 86) verbunden ist, wobei die Kontaktflächen (84, 86) zwischen dem abgeflachten Rohr (40) und den Heizstäben (42, 44) eben ausgebildet sind,
**dadurch gekennzeichnet, dass**
das abgeflachte Rohr (40) Enden (88, 90) aufweist, in die schlauchartige Anschlussstutzen (66, 68) einer Wasserzuleitung und/oder Wasserableitung eingesteckt sind, und dass die Anschlussstutzen (66, 68) aus Kunststoff gefertigt sind und Befestigungsmittel (74, 76, 78, 80) zur Befestigung des Durchlauferhitzers (38) an einem Gehäuse der Kaffeemaschine aufweisen.

2. Kaffeemaschine nach Anspruch 1, **dadurch gekennzeichnet, dass** die Anschlussstutzen (66, 68) mit Dichtungen (70, 72) versehen sind.

3. Kaffeemaschine nach Anspruch 1 oder 2,**dadurch gekennzeichnet, dass** an den Befestigungsmitteln (74, 76, 78, 80) Halterungen für weitere Bauteile vorgesehen sind.

## Claims

1. Coffee machine for preparing coffee, particularly on the basis of coffee sachets, comprising a pump (32) for conveying water, a low-mass throughflow heater (38) having a flattened pipe (40) for conducting water, the pipe being thermally connected with two heating rods (42, 44), which are provided at opposite sides of the flattened pipe, by way of at least one respective contact surface (84, 86), wherein the contact surfaces (84, 86) are formed to be flat between the flattened pipe (40) and the heating rods (42, 44), **characterised in that** the flattened pipe (40) has ends (88, 90) into which hose-like connecting stub pipes (66, 68) of a water feed duct and/or water discharge duct are plugged and that the connecting stub pipes (66, 68) are made of plastics material and have fastening means (74, 76, 78, 80) for fastening the throughflow heater (38) to a housing of the coffee machine.

2. Coffee machine according to claim 1, **characterised in that** the connecting stub pipes (66, 68) are provided with seals (70, 72).

3. Coffee machine according to claim 1 or 2, **characterised in that** mounts for further components are provided at the fastening means (74, 76, 78, 80).

## Revendications

1. Machine à café pour la préparation de café, en particulier sur la base de dosettes de café, comportant une pompe (32) pour le transport d'eau, un chauffe-eau instantané (38) à faible masse, qui présente un tuyau (40) aplati pour le guidage de l'eau, lequel est relié thermiquement par respectivement au moins une surface de contact (84, 86) à deux barres chauffantes (42, 44) prévues sur des côtés opposés de tuyau aplati, les surfaces de contact (84, 86) étant conçues planes entre le tuyau (40) aplati et les barres chauffantes (42, 44),
**caractérisée en ce que**
le tuyau (40) aplati présente des extrémités (88, 90), dans lesquelles sont emboîtées des tubulures de raccordement (66, 68) de type tuyau flexible d'une arrivée d'eau et/ou d'une évacuation d'eau, et **en ce que** les tubulures de raccordement (66, 68) sont fabriquées en plastique et présentent des moyens de fixation (74, 76, 78, 80) pour la fixation du chauffe-eau instantané (38) sur un boîtier de la machine à café.

2. Machine à café selon la revendication 1**, caractérisée en ce que** les tubulures de raccordement (66, 68) sont dotées de joints (70, 72).

3. Machine à café selon la revendication 1 ou 2, **caractérisée en ce que** des supports pour d'autres composants sont prévus sur les moyens de fixation (74, 76, 78, 80).
